# EUROPÄISCHE PATENTSCHRIFT

(11) **EP 0 968 543 B1**
(45) Veröffentlichungstag und Bekanntmachung des Hinweises auf die Patenterteilung: **05.06.2002**
(21) Anmeldenummer: 98919039.2
(22) Anmeldetag: 05.03.1998
(51) Int. Cl.: H01M 8/12

(54) **HOCHTEMPERATUR-BRENNSTOFFZELLE MIT VERBUNDSTOFF-KATHODE**
HIGH-TEMPERATURE FUEL CELLS WITH A COMPOSITE MATERIAL CATHODE
PILE A COMBUSTIBLE HAUTE TEMPERATURE DOTEE D'UNE CATHODE EN MATERIAU COMPOSITE

(30) Priorität: 20.03.1997 DE 19711684
(43) Veröffentlichungstag der Anmeldung: 05.01.2000
(73) Patentinhaber: SIEMENS AKTIENGESELLSCHAFT, 80333 München (DE)
(72) Erfinder: LANDES, Harald, D-90607 Rückersdorf (DE); RICHTER, Franz, D-91077 Neunkirchen (DE); SCHICHL, Hermann, D-91207 Lauf (DE)
(86) Internationale Anmeldenummer: DE9800660
(87) Internationale Veröffentlichungsnummer: WO9843308

(56) Entgegenhaltungen:
- EP-A- 0 633 619
- WO-A-94/20998
- US-A- 5 413 880
- US-A- 5 670 270
- PATENT ABSTRACTS OF JAPAN vol. 095, no. 004, 31.Mai 1995 -& JP 07 006774 A (TOHO GAS CO LTD), 10.Januar 1995,
- PATENT ABSTRACTS OF JAPAN vol. 018, no. 355 (E-1573), 5.Juli 1994 & JP 06 096791 A (NIPPON TELEGR & TELEPH CORP), 8.April 1994,
- PATENT ABSTRACTS OF JAPAN vol. 097, no. 002, 28.Februar 1997 -& JP 08 279363 A (TOHO GAS CO LTD), 22.Oktober 1996, -& DATABASE WPI Derwent Publications Ltd., London, GB; AN 97-009201 XP002071984 -& CHEMICAL ABSTRACTS, vol. 126, no. 4, 27.Januar 1997 Columbus, Ohio, US; abstract no. 49203, TAMURA ET AL: "Solid electrolyte for fuel cells and their manufacture" XP002071981
- PATENT ABSTRACTS OF JAPAN vol. 097, no. 001, 31.Januar 1997 -& JP 08 250135 A (TOHO GAS CO LTD), 27.September 1996, -& DATABASE WPI Derwent Publications Ltd., London, GB; AN 96-490707 XP002071985 -& CHEMICAL ABSTRACTS, vol. 125, no. 26, 23.Dezember 1996 Columbus, Ohio, US; abstract no. 334163, TAMURA ET AL: "Solid electrolyte fuel cells and manufacture of the fuel cells" XP002071982
- PATENT ABSTRACTS OF JAPAN vol. 097, no. 001, 31.Januar 1997 -& JP 08 250134 A (TOHO GAS CO LTD), 27.September 1996, -& DATABASE WPI Derwent Publications Ltd., London, GB; AN 96-490706 XP002071986 -& CHEMICAL ABSTRACTS, vol. 125, no. 26, 23.Dezember 1996 Columbus, Ohio, US; abstract no. 334164, TAMURA ET AL: "Solid electrolyte fuel cells and manufacture of the fuel cells" XP002071983
- ABRANTES J C C ET AL: "COMPOSITE CATHODES FOR SOLID OXIDE FUEL CELLS" PROPERTIES OF CERAMICS, MADRID, SEPT. 12 - 17, 1993, Bd. VOL. 2, Nr. CONF. 3, 12.September 1993, DURAN P;FERNANDEZ J F, Seiten 323-328, XP000416113
- PATENT ABSTRACTS OF JAPAN vol. 095, no. 004, 31.Mai 1995 & JP 07 006768 A (TOHO GAS CO LTD), 10.Januar 1995,

## Beschreibung

Die Erfindung bezieht sich auf eine Hochtemperatur-Brennstoffzelle.

Es ist bekannt, daß bei der Elektrolyse von Wasser die Wassermoleküle durch elektrischen Strom in Wasserstoff H₂ und Sauerstoff O₂ zerlegt werden. In einer Brennstoffzelle läuft dieser Vorgang in umgekehrter Richtung ab. Durch eine elektrochemische Verbindung von Wasserstoff H₂ und Sauerstoff O₂ zu Wasser entsteht elektrischer Strom mit hohem Wirkungsgrad und, wenn als Brenngas reiner Wasserstoff H₂ eingesetzt wird, ohne Emission von Schadstoffen und Kohlendioxid CO₂. Auch mit technischen Brenngasen, beispielsweise Erdgas oder Kohlegas, und mit Luft (die zusätzlich mit Sauerstoff O₂ angereichert sein kann) anstelle von reinem Sauerstoff O₂ erzeugt eine Brennstoffzelle deutlich weniger Schadstoffe und weniger Kohlendioxid CO₂ als andere Energieerzeuger, die mit fossilen Energieträgern arbeiten. Die technische Umsetzung des Prinzips der Brennstoffzelle hat zu unterschiedlichen Lösungen, und zwar mit verschiedenartigen Elektrolyten und mit Betriebstemperaturen T zwischen 80 °C und 1000 °C, geführt.

In Abhängigkeit von ihrer Betriebstemperatur T werden die Brennstoffzellen in Nieder-, Mittel- und Hochtemperatur-Brennstoffzellen eingeteilt, die sich wiederum durch verschiedene technische Ausführungsformen unterscheiden.

Bei dem aus einer Vielzahl von Hochtemperatur-Brennstoffzellen sich zusammensetzenden Hochtemperatur-Brennstoffzellenstapel (in der Fachliteratur wird ein Brennstoffzellenstapel auch "Stack" genannt) liegen unter einer oberen Verbundleiterplatte, welche den Hochtemperatur-Brennstoffzellenstapel abdeckt, der Reihenfolge nach wenigstens eine Schutzschicht, eine Kontaktschicht, eine Elektrolyt-Elektroden-Einheit, eine weitere Kontaktschicht, eine weitere Verbundleiterplatte usw.

Die Elektrolyt-Elektroden-Einheit umfaßt dabei zwei Elektroden und einen zwischen den beiden Elektroden angeordneten als Membran ausgeführten Festelektrolyten. Dabei bilden jeweils eine zwischen benachbarten Verbundleiterplatten liegende Elektrolyt-Elektroden-Einheit mit den beidseitig an der Elektrolyt-Elektroden-Einheit unmittelbar anliegenden Kontaktschichten eine Hochtemperatur-Brennstoffzelle, zu der auch noch die an den Kontaktschichten anliegenden Seiten jeder der beiden Verbundleiterplatten gehören. Dieser Typ und weitere Brennstoffzellen-Typen sind beispielsweise aus dem "Fuel Cell Handbook" von A. J. Appleby und F. R. Foulkes, 1989, Seiten 440 bis 454, bekannt.

Die Leistungsfähigkeit der Elektroden der Elektrolyt-Elektroden-Einheit der Hochtemperatur-Brennstoffzelle ist mitbestimmend für den Wirkungsgrad der gesamten Hochtemperatur-Brennstoffzelle. Wesentliche Parameter sind dabei die Geschwindigkeit der Umwandlung des jeweiligen Betriebsmittels in Elektronen, Ionen und Reaktionsprodukte bei der elektrochemischen Reaktion, die Geschwindigkeit des Transportes des Betriebsmittels zum Ort der elektrochemischen Reaktion sowie die Leitfähigkeit für Elektronen und Ionen, die für den Ablauf der elektrochemischen Reaktion erforderlich sind. Die erforderliche Elektronenleitfähigkeit der Anode wird in der Regel durch ein sogenanntes "Cermet" erreicht, das ein Gerüst aus Metallkörnern (zum Beispiel Nickel Ni) enthält und durch ein geeignetes Füllmaterial auch eine Ionenleitfähigkeit aufweist. Bei der Kathode wird im allgemeinen eine elektronenleitfähige Keramik verwendet, die ebenfalls auch ionenleitfähig ist. Für die Ionenleitfähigkeit der Struktur enthalten die beiden Elektroden und die Membran jeweils einen entsprechenden Elektrolyten.

Ein wesentliches Problem besteht im Erreichen einer ausreichenden Ionenleitfähigkeit im Werkstoff der jeweiligen Elektrode. Außerdem muß diese Ionenleitfähigkeit über die gesamte Betriebsdauer t der Hochtemperatur-Brennstoffzelle zur Verfügung stehen. Um dies zu erreichen wird bei einer als Kathode ausgeführten Elektrode ein Elektrolyt einem elektrisch leitenden Grundwerkstoff beigemischt. Als Grundwerkstoff kann beispielsweise ein Lanthanstrontiummanganat LaₓSr_{y}MnO₃ verwendet werden.

Bei den aus dem Stand der Technik bekannten Kathoden besteht der Elektrolyt der Kathode aus einem Zirkoniumdioxid ZrO₂, dem ein Anteil von Yttriumoxid Y₂O₃ beigemischt ist. Enthält der Elektrolyt Zirkoniumdioxid ZrO₂ mit einer Beimischung von 8 Mol-% Yttriumoxid Y₂O₃, so weist die Kathode bei einer Betriebstemperatur T von angenähert 850°C einen Wert von ungefähr 13,3 Ωcm für den ionischen Widerstand auf. Bei einer Betriebsdauer t von über 1000 Stunden verschlechtert sich dieser Wert für die ionische Leitfähigkeit der Kathode auf 22 Ωcm. Wird dem Zirkoniumdioxid ZrO₂ ein Anteil von 10 Mol-% Yttriumoxid Y₂O₃ beigemischt, so hat die Kathode einen höheren Wert von angenähert 17,3 Ωcm für den ionischen Widerstand. Allerdings zeigt dieser Werkstoff für die Elektrode bei der Betriebstemperatur T von angenähert 850 °C in Abhängigkeit von der Betriebsdauer t kein Alterungsverhalten, d.h. im wesentlichen keine Verschlechterung des Wertes für den elektrischen Widerstand und damit auch des Wertes für die ionische Leitfähigkeit der Kathode.

Der Erfindung liegt somit die Aufgabe zugrunde, eine Hochtemperatur-Brennstoffzelle mit einer Kathode anzugeben, die eine hohe ionische Leitfähigkeit für die Kathode aufweist und eine Verschlechterung der Leitfähigkeit für die Kathode mit einer zunehmenden Betriebsdauer t weitgehend vermeidet.

Diese Aufgabe wird gemäß der Erfindung durch eine Hochtemperatur-Brennstoffzelle mit einer Kathode gelöst, die wenigstens eine erste Lage umfaßt, die 30 bis 60 Gew.-% eines ersten Elektrolyten enthält und der erste Elektrolyt Zirkoniumoxid ZrO₂ mit einem Anteil Scandiumoxid Sc₂O₃ enthält.

Wird Scandiumoxid Sc₂O₃ im ersten Elektrolyten der Kathode anstelle von Yttriumoxid Y₂O₃ verwendet, so wird der Wert für den elektrischen Widerstand der Kathode gegenüber den aus dem Stand der Technik bekannten Kathoden wesentlich verringert (zum Beispiel halbiert). Damit wird zugleich die ionische Leitfähigkeit wenigstens verdoppelt. Außerdem bleibt die ionische Leitfähigkeit in Abhängigkeit von der Betriebsdauer t im wesentlichen erhalten.

Vorzugsweise sind 8 bis 13 Mol-% Scandiumoxid Sc₂O₃ im ersten Elektrolyten enthalten.

Insbesondere können 9 bis 11 Mol-% Scandiumoxid Sc₂O₃ im ersten Elektrolyten enthalten enthalten sein. Dieser verwendete Bereich für das Scandiumoxid Sc₂O₃ hat sich experimentell am günstigsten für die Verbesserung der ionischen Leitfähigkeit der Kathode erwiesen.

In einer weiteren Ausgestaltung sind angenähert 10 Mol-% Scandiumoxid Sc₂O₃ im ersten Elektrolyten enthalten. Bei einer Betriebstemperatur T von angenähert 850 °C hat der ionische Widerstand einen Wert von ungefähr 6,2 Ωcm. Der Vergleich mit einem Elektrolyten, der 10 Mol-% Yttriumoxid Y₂O₃ anstelle von Scandiumoxid Sc₂O₃ enthält und einen ionischen Widerstand von angenähert 17,3 Ωcm aufweist, zeigt, daß der ionische Widerstand bei der Verwendung von 10 Mol-% Scandiumoxid Sc₂O₃ wenigstens um einen Faktor 2 verringert wird. Der Scandiumoxid Sc₂O₃ enthaltende erste Elektrolyt weist in Abhängigkeit von der Betriebsdauer t im wesentlichen keine Erhöhung des ionischen Widerstandes auf. Damit ist der Wert für die ionische Leitfähigkeit gegenüber den aus dem Stand der Technik bekannten Kathoden um wenigstens den Faktor 2 verbessert.

Vorzugsweise ist 40 bis 70 % eines Lanthanstrontiummanganat LaₓSr_{y}MnO₃ in der ersten Lage enthalten. Das Lanthanstrontiummanganat LaₓSr_{y}MnO₃ ist der elektrisch leitende Grundwerkstoff zum Beimischen des ersten Elektrolyten.

Insbesondere kann das Lanthanstrontiummanganat LaₓSr_{y}MnO₃ unterstöchiometrisch sein, d.h. die Summe aus x und y ist kleiner 1. Durch den Einsatz von unterstöchiometrischem Lanthanstrontiummanganat LaₓSr_{y}MnO₃ wird die Bildung von Lanthanzirkonat weitgehend vermieden und dadurch eine Verschlechterung der ionischen Leitfähigkeit verhindert.

In einer weiteren Ausgestaltung ist für das Lanthanstrontiummanganat LaₓSr_{y}MnO₃ x etwa gleich 0,78 und y etwa gleich 0,2. Diese Werte für x und y haben sich in der Praxis bewährt.

Vorzugsweise ist bis zu 1 Mol-% Aluminiumoxid Al₂O₃ im Elektrolyten enthalten. Scandium Sc weist nahezu den gleichen Ionenradius wie Zirkonium Zr auf, was zu einer geringen Gitterverzerrung und demzufolge zu einer ausreichenden Ionenleitfähigkeit führt. Die Stabilität dieser Struktur wird durch die Zugabe von Aluminiumoxid Al₂O₃ noch weiter erhöht.

In einer weiteren Ausgestaltung umfaßt die Kathode eine zweite Lage aus unterstöchiometrischem Lanthanstrontiummanganat LaₓSr_{y}MnO₃, die auf einer Seite der ersten Lage angeordnet ist. Diese zweite Lage fördert das Abgreifen des elektrischen Stomes I aus der Hochtemperatur-Brennstoffzelle.

Wie bereits erwähnt, enthält die Hochtemperatur-Brennstoffzelle üblicherweise eine Elektrolyt-Elektroden-Einheit, die die Kathode, eine Anode und eine zwischen den beiden angeordnete Membran umfaßt. Vorzugsweise enthält die Membran Zirkoniumoxid ZrO₂ mit einem Anteil von 8 bis 13 Mol-% Scandiumoxid Sc₂O₃. Die Membran der Elektrolyt-Elektroden-Einheit, mit anderen Worten der Werkstoff am Ort der elektrochemischen Reaktion, enthält vorzugsweise dieselben Komponenten wie der erste Elektrolyt der Kathode. Dadurch wird die ionische Leitfähigkeit der Membran zusätzlich verbessert und zudem der thermische Ausdehnungskoeffizient an denjenigen des Werkstoffes der Kathode angepaßt.

Insbesondere kann die Anode 40 bis 70 Gew.-% Nickel Ni und 30 bis 60 Gew.-% eines zweiten Elektrolyten enthalten, der Zirkoniumoxid ZrO₂ mit einem Anteil von 8 bis 13 Mol-% Scandiumoxid Sc₂O₃ enthält. Dadurch wird die ionische Leitfähigkeit der Anode gegenüber den aus dem Stand der Technik bekannten Anoden verbessert.

Weitere vorteilhafte Ausgestaltungen sind in den Unteransprüchen beschrieben.

Zum besseren Verständnis der Erfindung und ihrer Weiterbildungen wird ein Ausführungsbeispiel anhand einer Figur, die einen schematischen Ausschnitt aus einer Hochtemperatur-Brennstoffzelle darstellt, erläutert.

Gemäß der FIG umfaßt eine Hochtemperatur-Brennstoffzelle 2 eine Festelektrolyt-Elektroden-Einheit (Einheit 4). Die Einheit 4 besteht aus einer Kathode 6, einer Membran 8 und einer Anode 10, die in dieser Reihenfolge übereinander oder untereinander angeordnet sind. Die Einheit 4 ist zwischen zwei nicht näher dargestellten Verbundleiterplatten zum Versorgen der Einheit 4 mit Betriebsmitteln angeordnet.

Die Kathode 6 umfaßt eine erste 12 und eine zweite Lage 14, wobei die erste Lage 12 auf der Membran 8 angeordnet ist. Die erste Lage 12 der Kathode 6 besteht aus 30 bis 60 Gew.-% eines ersten Elektrolyten und 40 bis 70 Gew.-% eines Lanthanstrontiummanganats LaₓSr_{y}MnO₃ handelsüblicher Reinheit. Dabei enthält der erste Elektrolyt Zirkoniumoxid ZrO₂ mit einem Anteil von 8 bis 13 Mol-% Scandiumoxid Sc₂O₃.

Vorzugsweise beträgt der Anteil an Scandiumoxid Sc₂O₃ im ersten Elektrolyten 9 bis 11 Mol-%, insbesondere angenähert 10 Mol-%.

Lanthanzirkonat im ersten Elektrolyten kann zu einer Verschlechterung der ionischen Leitfähigkeit der Kathode 6 führen. Die Bildung von Lanthanzirkonat wird jedoch weitgehend vermieden, indem unterstöchiometrisches Lanthanstrontiummanganat LaₓSr_{y}MnO₃ verwendet ist, d.h. die Summe aus x und y ist kleiner 1. Vorzugsweise ist x gleich 0,78 und y gleich 0,2. Außerdem ist dem ersten Elektrolyten der Kathode 6 zum Stabilisieren der Gitterstruktur 1 Mol-% Aluminiumoxid Al₂O₃ beigemischt.

Der Wert für die Dicke der ersten Lage 12 der Kathode 6 beträgt 35 µm (allgemeiner:zwischen 5 und 50 µm). Durch diese Maßnahme ist eine ausreichende elektrochemische Aktivität der Kathode 6 und damit der gesamten Hochtemperatur-Brennstoffzelle 2 bei Betriebstemperaturen T zwischen 750 und 850 °C gewährleistet.

Die auf der ersten Lage 12 angeordnete zweite Lage 14 besteht aus einem Lanthanstrontiummanganat LaₓSr_{y}MnO₃. Der Wert für die Dicke der zweiten Lage 14 beträgt wenigstens 15 Am. Diese kann aber auch bis zu 100 µm dick sein. Dadurch wird eine ausreichende elektrische Leitfähigkeit der Kathode 6 erreicht.

Die Membran 8, die zwischen der Kathode 6 und der Anode 10 angeordnet ist, besteht aus einem Zirkoniumoxid ZrO₂ mit einem Anteil von 8 bis 13 Mol-% Scandiumoxid Sc₂O₃. Die Membran 8 der Einheit 4, d.h. der Werkstoff am Ort der elektrochemischen Reaktion, besteht vorzugsweise aus denselben Komponenten wie der erste Elektrolyt der Kathode 6, möglicherweise in etwas veränderten Konzentrationen. Dadurch ist die ionische Leitfähigkeit der Membran 8 gegenüber den aus dem Stand der Technik bekannten Membranen verbessert und zudem der thermische Ausdehnungskoeffizient an denjenigen des Werkstoffes der Kathode 6 angepaßt.

Die Anode 10 besteht aus 30 bis 60 Gew.-% eines zweiten Elektrolyten und 40 bis 70 Gew.-% Nickel Ni, wobei der zweite Elektrolyt Zirkoniumoxid ZrO₂ mit einem Anteil von 8 bis 13 Mol-% Scandiumoxid Sc₂O₃ enthält. Durch diese Maßnahme wird auch die ionische Leitfähigkeit der Anode 10 der Einheit 4 gegenüber den aus dem Stand der Technik bekannten Anoden verbessert.

Durch die Verwendung von Scandiumoxid Sc₂O₃ im ersten Elektrolyten der ersten Lage 12 der Kathode 6 anstelle von Yttriumoxid Y₂O₃ wird der ionische Widerstand der Kathode gegenüber den aus dem Stand der Technik bekannten Kathoden wenigstens halbiert. Außerdem bleibt die ionische Leitfähigkeit in Abhängigkeit von der Betriebsdauer t der Hochtemperatur-Brennstoffzelle 2 weitgehend konstant, d.h. daß keine Alterung des ersten Elektrolyten zu beobachten ist.

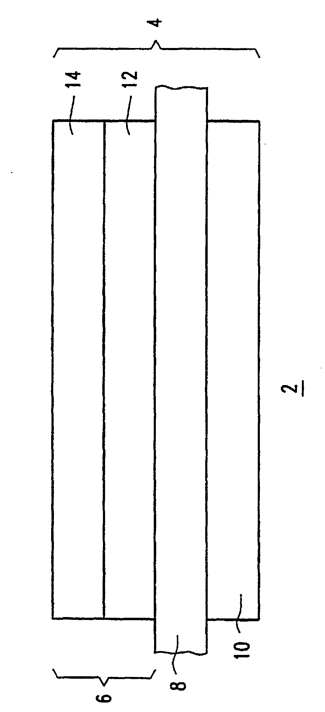

## Patentansprüche

1. Hochtemperatur-Brennstoffzelle (2) mit einer Kathode (6), die wenigstens eine erste Lage (12) und eine zweite Lage (14) umfaßt, wobei die erste Lage (12) 30 bis 60 Gew.-% eines ersten Elektrolyten aus Zirkoniumoxid ZrO₂ und mindestens einen Anteil Scandiumoxid Sc₂O₃ enthält, und die zweite Lage (14) aus unterstöchiometrischem Lantanstrontiummanganat LaₓSr_{y}MnO₃ auf einer Seite der ersten Lage (12) der Kathode (6) angeordnet ist.

2. Hochtemperatur-Brennstoffzelle (2) nach Anspruch 1,
**gekennzeichnet durch** 8 bis 13 Mol-% Scandiumoxid Sc₂O₃ im ersten Elektrolyten.

3. Hochtemperatur-Brennstoffzelle (2) nach Anspruch 1,
**gekennzeichnet durch** 9 bis 11 Mol-% Scandiumoxid Sc₂O₃ im ersten Elektrolyten.

4. Hochtemperatur-Brennstoffzelle (2) nach Anspruch 1,
**gekennzeichnet durch** angenähert 10 Mol-% Scandiumoxid Sc₂O₃ im ersten Elektrolyten.

5. Hochtemperatur-Brannstoffzelle (2) nach einem der vorhergehenden Ansprüche,
**dadurch gekennzeichnet, daß** 40 bis 70 Gew.-% eines Lanthanstrontiummanganats LaₓSr_{y}MnO₃ in der ersten Lage (12) enthalten sind.

6. Hochtemperatur-Brennstoffzelle (2) nach Anspruch 5,
**gekennzeichnet durch** eine unterstöchiometrische Zusammensetzung des Lanthanstrontiummanganats LaₓSr_{y}MnO₃.

7. Hochtemperatur-Brennstoffzelle (2) nach Anspruch 6,
**gekennzeichnet durch** Lanthanstrontiummanganat LaₓSr_{y}MnO₃ mit x etwa gleich 0,78 und y etwa gleich 0,2.

8. Hochtemperatur-Brennstoffzelle (2) nach einem der vorhergehenden Ansprüche,
**gekennzeichnet durch** einen Anteil bis zu 1 Mol-% Aluminiumoxid Al₂O₃ im ersten Elektrolyten.

9. Hochtemperatur-Brennstoffzelle (2) nach einem der vorhergehenden Ansprüche,
**gekennzeichnet durch** einen Wert zwischen 5 und 50 µm für die Dicke der ersten Lage (12).

10. Hochtemperatur-Brennstoffzelle (2) nach einem der Ansprüche 1 bis 8,
**gekennzeichnet durch** einen Wert von angenähert 35 µm für die Dicke der ersten Lage (12).

11. Hochtemperatur-Brennstoffzelle (2) nach einem der Ansprüche 1 bis 10,
**gekennzeichnet durch** eine untere Grenze von 10 µm für die Dicke der zweiten Lage (14).

12. Hochtemperatur-Brennstoffzelle (2) nach einem der vorhergehenden Anspruche,
**gekennzeichnet durch** eine Einheit (4), die die Kathode (6), eine Anode (10) und eine zwischen den beiden (6,10) angeordnete Membran (8) umfaßt, die Zirkoniumoxid ZrO₂ mit einem Anteil von 8 bis 13 Mol-% Scandiumoxid Sc₂O₃ enthält.

13. Hochtemperatur-Brennstoffzelle (2) nach Anspruch 12,
**dadurch gekennzeichnet, daß** die Anode (10) 30 bis 50 Gew.-% Nickel Ni und 30 bis 60 Gew.-% eines zweiten Elektrolyten enthält, der Zirkoniumoxid ZrO₂ mit einem Anteil von 8 bis 13 Mol% Scandiumoxid Sc₂O₃ enthält.

## Claims

1. High temperature fuel cell (2) having a cathode (6) which comprises at least a first layer (12) and a second layer (14), the first layer (12) containing 30 to 60% by weight of a first electrolyte made up of zirconium oxide ZrO₂ and at least a proportion of scandium oxide Sc₂O₃, and the second layer (14) made up of substoichiometric lanthanum strontium manganate LaₓSr_{y}MnO₃ is arranged on one side of the first layer (12) of the cathode (6).

2. High temperature fuel cell (2) according to Claim 1, **characterized by** 8 to 13 mol% scandium oxide Sc₂O₃ in the first electrolyte.

3. High temperature fuel cell (2) according to Claim 1, **characterized by** 9 to 11 mol% scandium oxide Sc₂O₃ in the first electrolyte.

4. High temperature fuel cell (2) according to Claim 1, **characterized by** approximately 10 mol% scandium oxide Sc₂O₃ in the first electrolyte.

5. High temperature fuel cell (2) according to one of the preceding claims, **characterized in that** the first layer (12) contains 40 to 70% by weight of a lanthanum strontium manganate LaₓSr_{y}MnO₃.

6. High temperature fuel cell (2) according to Claim 5, **characterized by** a substoichiometric composition of the lanthanum strontium manganate LaₓSr_{y}MnO₃.

7. High temperature fuel cell (2) according to Claim 6, **characterized by** lanthanum strontium manganate LaₓSr_{y}MnO₃ with x approximately equal to 0.78 and y approximately equal to 0.2.

8. High temperature fuel cell (2) according to one of the preceding claims, **characterized by** a proportion of upto 1 mol% aluminium oxide Al₂O₃ in the first electrolyte.

9. High temperature fuel cell (2) according to one of the preceding claims, **characterized by** a value of between 5 and 50 µm for the thickness of the first layer (12).

10. High temperature fuel cell (2) according to one of Claims 1 to 8, **characterized by** a value of approximately 35 µm for the thickness of the first layer (12).

11. High temperature fuel cell (2) according to one of Claims 1 to 10, **characterized by** a lower limit of 10 µm for the thickness of the second layer (14).

12. High temperature fuel cell (2) according to one of the preceding claims, **characterized by** a unit (4) which comprises the cathode (6), an anode (10) and a membrane (8) which is arranged between the two (6, 10) and contains zirconium oxide ZrO₂ with a proportion of 8 to 13 mol% scandium oxide Sc₂O₃.

13. High temperature fuel cell (2) according to Claim 12, **characterized in that** the anode (10) contains 30 to 50% by weight nickel Ni and 30 to 60% by weight of a second electrolyte which contains zirconium oxide ZrO₂ with a proportion of 8 to 13 mol% scandium oxide Sc₂O₃.

## Revendications

1. Pile (2) à combustible à haute température, ayant une cathode (6) qui comprend au moins une première couche (12) et une deuxième couche (14), la première couche (12) contenant de 30 à 60 % en poids d'un premier électrolyte en oxyde de zirconium ZrO₂ et au moins une proportion d'oxyde de scandium Sc₂O₃ et la deuxième couche (14) en manganate de strontium et de lanthane hypostoechiométrique LaₓSr_{Y}MnO₃ étant disposée sur une face de la première couche (12) de la cathode (6).

2. Pile (2) à combustible à haute température suivant la revendication 1,
**caractérisée par** de 8 à 13 % en moles d'oxyde de scandium Sc₂O₃ dans le premier électrolyte.

3. Pile (2) à combustible à haute température suivant la revendication 1,
**caractérisée par** 9 à 11 % en moles d'oxyde de scandium Sc₂O₃ dans le premier électrolyte.

4. Pile (2) à combustible à haute température suivant la revendication 1,
**caractérisée par** approximativement 10 % en moles d'oxyde de scandium Sc₂O₃ dans le premier électrolyte.

5. Pile (2) à combustible à haute température suivant l'une des revendications précédentes,
**caractérisée en ce que** de 40 à 70 % en poids d'un manganate de lanthane et de strontium LaₓSr_{y}MnO₃ sont contenus dans la première couche (12).

6. Pile (2) à combustible à haute température suivant la revendication 5,
**caractérisée par** une composition hypostoechiométrique du manganate de lanthane et de strontium LaₓSr_{y}MnO₃.

7. Pile (2) à combustible à haute température suivant la revendication 6,
**caractérisée par** du manganate de lanthane et de strontium LaₓSr_{y}MnO₃ avec x à peu près égal à 0,78 et y à peu près égal à 0,2.

8. Pile (2) à combustible à haute température suivant l'une des revendications précédentes,
**caractérisée par** une proportion allant jusqu'à 1 % en moles d'oxyde d'aluminium Al₂O₃ dans le premier électrolyte.

9. Pile (2) à combustible à haute température suivant l'une des revendications précédentes,
**caractérisée par** une valeur comprise entre 5 et 50 µm pour l'épaisseur de la première couche (12).

10. Pile (2) à combustible à haute température suivant l'une des revendications 1 à 8,
**caractérisée par** une valeur d'environ 35 µm pour l'épaisseur de la première couche (12).

11. Pile (2) à combustible à haute température suivant l'une des revendications 1 à 10,
**caractérisée par** une limite inférieure de 10 µm pour l'épaisseur de la deuxième couche (14).

12. Pile (2) à combustible à haute température suivant l'une des revendications précédentes,
**caractérisée par** une unité (14) qui comprend la cathode (6), une anode (10) et une membrane (8) interposée entre les deux (6, 10) et contenant de l'oxyde de zirconium ZrO₂ avec une proportion de 8 à 13 % en moles d'oxyde de scandium Sc₂O₃.

13. Pile (2) à combustible à haute température suivant la revendication 12,
**caractérisée en ce que** l'anode (10) contient de 30 à 50 % en poids de Nickel Ni et de 30 à 60 % en poids d'un deuxième électrolyte qui contient de l'oxyde de zirconium ZrO₂ avec une proportion de 8 à 13 % en moles d'oxyde de scandium Sc₂O₃.
